# EUROPÄISCHE PATENTSCHRIFT

(11) **EP 2 658 291 B1**
(45) Veröffentlichungstag und Bekanntmachung des Hinweises auf die Patenterteilung: **13.06.2018**
(21) Anmeldenummer: 12165371.1
(22) Anmeldetag: 24.04.2012
(51) Int. Cl.: H04W 4/02, H04W 4/18, H04L 29/08

(54) **Verfahren zur automatisierten Ermittlung des Aufenthaltsortes einer Person**
Method for automated detection of the location of a person
Procédé de détermination automatique du lieu de résidence d'une personne

(43) Veröffentlichungstag der Anmeldung: 30.10.2013
(73) Patentinhaber: Scheidt & Bachmann GmbH, 41238 Mönchengladbach (DE)
(72) Erfinder: Laumen, Heinz, 52538 Gangelt (DE); Miller, Norbert, 41063 Mönchengladbach (DE)
(74) Vertreter: Rausch Wanischeck-Bergmann Brinkmann

(56) Entgegenhaltungen:
- EP-A1- 2 410 714
- US-A1- 2003 163 287
- US-A1- 2011 081 634
- US-A1- 2012 083 286

## Beschreibung

Die vorliegende Erfindung betrifft ein Verfahren zur automatisierten Ermittlung des Aufenthaltsortes einer Person.
Im Stand der Technik sind Verfahren bekannt, beispielsweise aus dem Bereich des Strafvollzuges, wobei eine Person mit einem Sender ausgestattet wird. Dieser Sender ist eineindeutig zu erfassen, zu lokalisieren und zu identifizieren, so dass durch entsprechende Überwachungsmittel zu jedem Zeitpunkt der Aufenthaltsort der Person feststellbar ist. Dokument US 2012/083286 offenbart ein Verfahren zur automatisierten Ermittlung eines Aufenthaltsortes eines Mobilfunk-Endgerätes unter Verwendung von Umfeldinformationen. In einem vorgegebenen Ambiente, beispielsweise Hochsicherheitsbereichen, ist es darüber hinaus möglich, den Aufenthalt von Personen in bestimmten Bereichen festzustellen. Durch Verknüpfung beispielsweise mit Videoinformationen kann dann anhand von Überwachungspersonal der Aufenthaltsort einer konkreten Person ermittelt werden. Eine automatisierte Ermittlung ist nicht möglich.
Die Adaption solcher und ähnlicher Systeme für die Ermittlung des Aufenthaltsortes einer Person, beispielsweise um die Nutzung von ortsbezogenen Dienstleistungen wie im Fahrgeldmanagement oder für Systeme für Parkhäuser zu ermitteln, ist allerdings aufwendig und erfordert spezifische Hardwarekomponenten, wodurch diese Systeme kostenintensiv werden.
Im Bereich der Mobilfunktelefonie ist es bekannt, dass zu jedem Zeitpunkt ermittelt werden kann, in welchem Sektor eines Sendebereiches ein bestimmtes Mobilfunk-Endgerät genutzt wird. Diese Information ist vergleichsweise grob und eine entsprechende Auswertung würde keine konkreten Erkenntnisse erbringen.

Es gibt jedoch einen großen Bedarf an weitgehend automatisierten Systemen zur kontinuierlichen Ermittlung von Aufenthaltsorten einer Person, um folglich genutzte Dienstleistungen sicher ermitteln zu können. Hierunter fallen Anwendungsbereiche, in denen Personen abzurechnende Leistungen nutzen. Darunter fallen die Nutzung von Verkehrsmitteln, die Nutzung von kostenpflichtigen Bereichen, beispielsweise Befahren kostenpflichtiger Straßen, Nutzung kostenpflichtiger Parkplätze, Parkhäuser usw., immer verbunden mit Pkw, oder auch die Nutzung von Wellnessbereichen und Freizeitparks usw. ohne Pkw.

Zum Beispiel möchten Betreiber im öffentlichen Personenverkehr auf der einen Seite ihre Kosten für Verkauf, Kontrolle und Abrechnung von Beförderungsberechtigungen wie zum Beispiel Fahrscheine so gering wie möglich halten. Auf der anderen Seite möchten die Betreiber für ihre potenziellen Kunden eine möglichst niedrige Hemmschwelle für den Kauf und die Nutzung dieser Berechtigungen gewährleisten. Aus diesem Bestreben heraus sind in der Vergangenheit Verfahren für das elektronische Ticketing und das "Open Payment" entstanden, die beispielsweise im öffentlichen Personenverkehr in Form von sogenannten Check In-/Check Out-Systemen (wie beispielsweise das System "Touch and Travel" der DB) oder in Form von sogenannten Be In-/Be Out-Systemen (wie beispielsweise das System esprit der mcity GmbH) umgesetzt werden können.

Die heutigen Systeme für das elektronische Ticketing haben die Nachteile gemeinsam, dass sie auf der einen Seite signifikante Installations- und Betriebskosten für die Betreiber zum Beispiel in Form von Validatoren oder Kommunikationspunkten verursachen und dass sie auf der anderen Seite eine aktive Unterstützung durch den Nutzer bedingen und damit die Gefahr einer Fehl- oder Nichtbedienung mit sich bringen. Zusätzlich sind heutige Systeme in der Regel spezifisch für bestimmte Verkehrsmittel wie zum Beispiel für Bahn- und Busreisen entwickelt worden und können aufgrund ihrer technischen Spezialisierung nicht einfach auf ergänzende Verkehrsmittel wie zum Beispiel Bike Sharing- oder Car Sharing-Systeme bis hin zu flankierenden Kostenpositionen wie Park- und Mautgebühren übertragen werden.

Ausgehend vom vorbeschriebenen Stand der Technik liegt der vorliegenden Erfindung somit die Auf gab e zugrunde, ein Verfahren zur automatischen Ermittlung eines Aufenthaltsortes bereitzustellen, welches eine weitgehend automatisierte Erfassung der Nutzung kostenpflichtiger Leistungen ermöglicht und als Grundlage für automatisierte Abrechnungen verwendet werden kann.

Solche automatisierten Abrechnungen können sich zum Beispiel auf ortsabhängige Tarifstufen beziehen, wie zum Beispiel die durch den Aufenthalt in einem bestimmten Abteil in Anspruch genommene erste oder zweite Klasse eines Zugs der deutschen Bahn, ein bestimmter Bereich in ein Parkhaus, eine bestimmte Tarifstufe eines Taxis usw.

Zur **Lösung** dieser Aufgabe wird ein Verfahren mit den Merkmalen des Patentanspruches 1 vorgeschlagen. Weitere Vorteile und Merkmale ergeben sich aus den Unteransprüchen.

Gemäß der Erfindung werden Geodaten mit zusätzlichen Informationen aus dem gleichen Zeitbereich kombiniert. Bei den zusätzlichen Informationen handelt es sich um wenigstens eine Art der Beschleunigungsinformationen und/oder Umfeldinformationen.

Die kombinierten Daten werden dann anhand von gespeicherten Referenzdaten ausgewertet.

Geodaten sind Koordinateninformationen, die den Erfassungsort betreffen. Derartige Informationen können von Satelliten oder entsprechenden Alternativsystemen erlangt werden. Es können auch Mobilfunksektor-Informationen ausgewertet werden. Sinnvoll kann ein Höhensensor ausgewertet werden ebenso wie Local-Based-Services von kommerziellen Anbietern. Auch können separate lokale Ortsinformationen ausgewertet werden. Es ist sogar denkbar, zum erfindungsgemäßen Zweck Sender mit lokalen Ortsinformationen zu positionieren.

Gemäß einem vorteilhaften Vorschlag der Erfindung werden Geodaten im Störungsfall extrapoliert.

Die Beschleunigungs- und Umfeldinformationen werden mit der Sensorik im mobilen Endgerät generiert und nach Bedarf kombiniert. Die sensorischen Informationen umfassen Beschleunigungsinformationen, Winkelgeschwindigkeiten ("gyroskopischer Sensor"), Höheninformationen bezogen auf Normalnull oder andere Höhenbezugsflächen, akustische Werte wie Geräuschpegel, die mit einem Mikrophon erfasst werden, und/oder Temperaturwerte. Es wird deutlich, dass diese sensorischen Informationen beispielsweise mit einem heute marktüblichen Smartphone generiert werden können. Es ist darüber hinaus auch denkbar, auch zusätzliche Sensoren zu nutzen, die durch Erweiterungen der Hardware verfügbar gemacht werden.

Die kontinuierlich ermittelten sensorischen Informationen werden mit Referenzdaten abgeglichen, die jeweils charakteristisch für bestimmte Aufenthaltsorte - wie z.B. eine bestimmte Art von Nahverkehrszug - sind.

Erfindungsgemäß erlauben die Referenzdaten für sensorische Informationen einen Rückschluss aus den erfassten Informationen auf in Frage kommende Aufenthaltsorte und Fortbewegungsmittel. Dabei können die verschiedenen, dargestellten Informationenquellen (Sensoren) je nach Anwendungsfall unterschiedlich kombiniert werden. Beispielsweise ließe sich aus bestimmten Beschleunigungswerten und Geräuschpegeln mit einer definierten Wahrscheinlichkeit der Rückschluss ziehen, dass sich das mobile Endgerät in einem bestimmten Hochgeschwindigkeitszug, wie zum Beispiel dem ICE der Deutschen Bahn aufhält.

Unter dem Begriff Umfeldinformationen werden auch Informationen jeglicher Art zusammengefasst, die zusätzlich als Daten auf das Endgerät übertragen werden können. Hierbei kann es sich um die Auswertung von WLAN-Informationen, die Auswertung lokaler Webdienste und Internetdienste und dergleichen handeln.

Darunter fallen Fahrpläne, Veranstaltungspläne und dergleichen. Diese können gemäß der Erfindung um Echtzeitinformationen ergänzt werden, beispielsweise Fahrplanänderungen, Realfahrpläne und dergleichen.

Durch die Kombination der Geodaten mit einer Auswertung der Beschleunigungs- und Umfeldinformationen ist es beispielsweise möglich, festzustellen, ob sich eine Person in einem bestimmten Zug befindet, in einem bestimmten Bus oder an einem bestimmten Bahnhof. Es ist möglich, festzustellen, ob sich die Person an einem bestimmten Parkplatz befindet. Hier kann beispielsweise ein Start- und eine Endzeitpunkt ermittelt werden, woraus sich ergibt, dass die dazwischenliegende Zeit ein Parkzeitraum ist.

Gemäß der Erfindung können die Daten über ein modernes, marktübliches Mobilendgerät ermittelt werden. So lassen sich beispielsweise aktuelle Smartphones oder sonstige mobile Telefonendgeräte verwenden oder vergleichbare Geräte wie GPS-Navigationsgeräte und so weiter anpassen.

Die vorliegende Erfindung offenbart ein Verfahren, um auf Basis marktüblicher Sensorik in mobilen Endgeräten wie zum Bespiel "Smartphones" die Nutzung von Verkehrsmitteln und kostenpflichtigen Aufenthaltsorten wie zum Beispiel Parkhäusern automatisiert zu erkennen und diese Informationen als Grundlage für die Tarif- und Preisermittlung sowie deren Abrechnung bereitzustellen. Mit der Anwendung dieses Verfahrens entfällt in der Regel das Erfordernis für ein zusätzliches mobiles Gerät für die Tarifermittlung sowie für den Anwender, sich aktiv zu authentifizieren. Das Verfahren beruht auf folgenden methodischen Elementen:
Nach Aktivierung des Verfahrens auf dem mobilen Endgerät werden kontinuierlich Geodaten und sensorische Informationen wie Beschleunigungsinformationen und/oder Umfeldinformationen ermittelt.

Wenn bei der Erfassung des Bewegungsprofiles temporär weder Satelliten- noch funkgestützte Ortsinformationen verfügbar sind, werden diese Unterbrechungen - bis zu einem gewissen Zeitraum und solange sich gemäß Sensorik das Verkehrsmittel ändert - extrapoliert.

Mittels der Geodaten werden aussagekräftige Bewegungsprofile erstellt, während die sensorischen Informationen in regelmäßigen Zeitabständen mit Referenzdaten für sensorische Informationen abgeglichen werden, um mögliche aussagekräftige Rückschlüsse auf die Art des Aufenthaltsortes wie zum Beispiel einen bestimmten Zug - oder Bustyp zu ziehen.

Die Referenzdaten werden dabei entweder lokal auf dem Endgerät gespeichert oder über ein Hintergrundsystem zur Verfügung gestellt, ähnlich wie es üblicherweise auch mit akustischen Referenzinformationen für Klangprofile geschieht, um Rückschlüsse auf Interpreten und Titel einer aufgezeichnete Musik zu ziehen.

Die Referenzdaten für die Nutzung einer Dienstleistung können auch aus dynamischen Echtzeitinformationen ermittelt werden, welche zum Beispiel von den mobilen Endgeräten anderer Endkunden stammen, welche diese Dienstleistung nutzen. So könnte beispielsweise das plötzliche Abbremsen eines Busses durch Erfassung im mobilen Endgerät eines Nutzers, von dem die Nutzung des Busses bekannt ist, genutzt werden, um im Abgleich mit den sensorischen Informationen anderer Nutzer (Abbremsvorgang zum identischen Zeitpunkt) zu ermitteln, inwieweit diese denselben Bus nutzen.

Auf Basis der Bewegungsprofile und optional auch auf Basis der Rückschlüsse auf die Art des Aufenthaltsortes aus den sensorischen Informationen werden vor diesem Hintergrund ebenfalls Umfeldinformationen ausgewertet. Aus den Umfeldinformationen werden gemeinsam mit den bereits vorhandenen Sensor- und Geodaten Rückschlüsse auf die möglicherweise genutzte Dienstleistung gezogen. Als relevante Umfeldinformationen werden zum Beispiel die Fahrpläne und Echtzeit-Fahrtinformationen eines Nahverkehrszuges auf einer bestimmten Fahrtstreckte klassifiziert, wenn Geodaten und sensorische Informationen den Rückschluss auf dieses Verkehrsmittel und diese Strecke zulassen. Alternativ könnten zum Beispiel auch die Tarife eines Taxiunternehmens oder eines Parkhauses solche Umfeldinformationen sein, die auf Basis der Geodaten und sensorischen Informationen zur Auswertung ermittelt werden.

Ist die zuvor beschriebene Extrapolation für den Störungsfall nicht mehr möglich, ist die automatisierte Nutzungsermittlung des Verkehrsmittels nicht mehr möglich. Der Nutzer wird dann aufgefordert, seinen Aufenthaltsort über eine von mehreren vordefinierten Methoden aktiv nachzuweisen. Dies ist beispielsweise ein NFC-basiertes Terminal mit Ortsinformationen in Form eines Validators.

Auf Basis der beschriebenen methodischen Elemente wird vorzugsweise in einem Hintergrundsystem ein Profil erzeugt, das für den Zeitraum der Aktivierung des Verfahrens durchgängig die Aufenthaltsorte und die dafür in Anspruch genommenen Dienstleistungen bereitstellt. Diese Information kann im nächsten Schritt für Abrechnungszwecke genutzt werden. Der Nutzer kann die generierten Informationen zum genutzten Verkehrsmittel in Echtzeit einsehen und bei Bedarf auch manuell Unterbrechungen einbringen. In die Abrechnung kann dabei auch die Erkennung flankierender Kosten wie Parkhaus- und Mautgebühren einbezogen werden.

Die durch die Sensorik des mobilen Gerätes zusätzlich ermittelten Umfeldinformationen werden für eine stetige Aktualisierung der Referenzdaten anonym auf einem Server gespeichert. So wird sichergestellt, dass Veränderungen der Referenzdaten bei Nutzung eines Verkehrsmittels (wie sie beispielsweise durch eine neue Generation von Hochgeschwindigkeitszügen verursacht werden können) schnell erfasst und in allen folgenden Auswertungen berücksichtigt werden.

## Patentansprüche

1. Verfahren zur automatisierten Ermittlung eines Aufenthaltsortes einer mit einem geeigneten Endgerät ausgestatteten Person, wobei zu jeweils aufeinander abgestimmten Zeitpunkten
a) Geodaten sowie
b) Beschleunigungsinformationen und
c) wenigstens eine Umfeldinformation der Art
akustische Werte und/oder
Temperaturwerte und/oder
über WLAN bereitgestellte Informationen
erfasst werden, welche dann anhand von gespeicherten Referenzdaten über Beschleunigung und Umfeld, welche jeweils charakteristisch für bestimmte Aufenthaltsorte sind, ausgewertet werden, **dadurch gekennzeichnet, dass** die Referenzdaten Echtzeitinformationen umfassen.

2. Verfahren nach Anspruch 1, **dadurch gekennzeichnet, dass** für die Geodatenerfassung Satellitensignale und/oder Mobilfunk-Sektor-Informationen ausgewertet werden.

3. Verfahren nach einem der vorhergehenden Ansprüche, **dadurch gekennzeichnet, dass** für die Geodatenerfassung Höhensensoren ausgewertet werden.

4. Verfahren nach einem der vorhergehenden Ansprüche, **dadurch gekennzeichnet, dass** für die Geodatenerfassung "Local based Services" von kommerziellen Anbietern ausgewertet werden.

5. Verfahren nach einem der vorhergehenden Ansprüche, **dadurch gekennzeichnet, dass** Geodaten im Störungsfall extrapoliert werden.

6. Verfahren nach einem der vorhergehenden Ansprüche, **dadurch gekennzeichnet, dass** für die Erfassung der Beschleunigung Sensoren zur Messung der Beschleunigung und/oder der Winkelgeschwindigkeit ausgewertet werden.

7. Verfahren nach einem der vorhergehenden Ansprüche, **dadurch gekennzeichnet, dass** die Referenzdaten geplante Informationen umfassen.

8. Verfahren nach einem der vorhergehenden Ansprüche, **dadurch gekennzeichnet, dass** die Referenzdaten Informationen sind, welche von dem mobilen Endgerät einer Person stammen, welche diese Dienstleistung nutzt.

9. Verfahren nach einem der vorhergehenden Ansprüche, **dadurch gekennzeichnet, dass** zur Daten- bzw. Informationserfassung ein Mobil-Endgerät verwendet wird.

10. Verfahren nach einem der vorhergehenden Ansprüche, **dadurch gekennzeichnet, dass** die Datenauswertung Informationen über die Nutzung von Verkehrsmitteln umfasst.

11. Verfahren nach einem der vorhergehenden Ansprüche, **dadurch gekennzeichnet, dass** nach erfolgter Datenauswertung von der Person eine Ergebnisbestätigung abgefragt wird.

## Claims

1. A method for the automated detection of a location of a person equipped with a suitable terminal, wherein at points of time which are respectively coordinated with each other
a) geo data as well as
b) acceleration information and
c) at least one surroundings information item of the type
acoustic values and/or
temperature values and/or
information provided via WLAN
will be collected which will then be evaluated by means of stored reference data related to acceleration and surroundings which are respectively characteristic of certain locations, **characterized in that** the reference data comprise real-time information.

2. A method according to claim 1, **characterized in that** satellite signals and/or mobile sector information will be evaluated for the geo data collection.

3. A method according to one of the preceding claims, **characterized in that** height sensors will be evaluated for the geo data collection.

4. A method according to one of the preceding claims, **characterized in that** "local based services" provided by commercial providers will be evaluated for the geo data collection.

5. A method according to one of the preceding claims, **characterized in that** geo data will be extrapolated in case of fault.

6. A method according to one of the preceding claims, **characterized in that** sensors for measuring the acceleration and/or the angular velocity will be evaluated for detecting the acceleration.

7. A method according to one of the preceding claims, **characterized in that** the reference data comprise planned information.

8. A method according to one of the preceding claims, **characterized in that** the reference data are information which originates from the mobile terminal of a person who uses this service.

9. A method according to one of the preceding claims, **characterized in that** a mobile terminal will be used for collecting data respectively information.

10. A method according to one of the preceding claims, **characterized in that** the data evaluation comprises information about the use of means of transport.

11. A method according to one of the preceding claims, **characterized in that** after the data evaluation has been completed, a confirmation of the findings will be requested from the person.

## Revendications

1. Procédé de détermination automatique d'un emplacement d'une personne munie d'un terminal approprié, dans lequel
a) des données géographiques ainsi que
b) des informations d'accélération et
c) au moins une information d'environnement du type
des valeurs acoustiques et/ou
des valeurs de température et/ou
des informations fournies via WLAN
sont collectées à des moments respectivement coordonnés les uns avec les autres, lesquelles informations sont évaluées à l'aide des données de référence par rapport à l'accélération et à l'environnement, qui sont caractéristiques d'emplacements particuliers, **caractérisé en ce que** les données de référence comprennent des informations en temps réel.

2. Procédé selon la revendication 1, **caractérisé en ce que** des signaux de satellite et/ou des informations de secteur mobile sont évalués pour la collection de données géographiques.

3. Procédé selon l'une des revendications précédentes, **caractérisé en ce que** des capteurs de hauteur sont évalués pour la collection de données géographiques.

4. Procédé selon l'une des revendications précédentes, **caractérisé en ce que** des « local based services » (services à base locale) offerts par des fournisseurs commerciaux sont évalués pour la collection de données géographiques.

5. Procédé selon l'une des revendications précédentes, **caractérisé en ce que** des données géographiques sont extrapolées en cas de défaut.

6. Procédé selon l'une des revendications précédentes, **caractérisé en ce que** des capteurs destinés à mesurer l'accélération et/ou la vitesse angulaire sont évalués pour déterminer l'accélération.

7. Procédé selon l'une des revendications précédentes, **caractérisé en ce que** les données de référence comprennent des informations planifiées.

8. Procédé selon l'une des revendications précédentes, **caractérisé en ce que** les données de référence sont des informations qui proviennent du terminal mobile d'une personne, qui utilise ce service.

9. Procédé selon l'une des revendications précédentes, **caractérisé en ce qu'**un terminal mobile est utilisé pour la collection de données ou d'informations.

10. Procédé selon l'une des revendications précédentes, **caractérisé en ce que** l'évaluation de données comprend des informations par rapport à l'utilisation de moyens de transport.

11. Procédé selon l'une des revendications précédentes, **caractérisé en ce qu'**après l'achèvement de l'évaluation de données, une confirmation de résultat est demandée de la personne.
